# EUROPÄISCHE PATENTANMELDUNG

(11) **EP 2 410 147 A2**
(43) Veröffentlichungstag der Anmeldung: **25.01.2012**
(21) Anmeldenummer: 11173170.9
(22) Anmeldetag: 08.07.2011
(51) Int. Cl.: F01N 3/20, F01N 3/28, F28D 20/00

(54) **Abgasanlage mit reaktivem Heizsystem**

(30) Priorität: 22.07.2010 DE 102010031852
(71) Anmelder: J. Eberspächer GmbH & Co. KG, 73730 Esslingen (DE)
(72) Erfinder: Gaiser, Gerd, 72768 Reutlingen (DE)
(74) Vertreter: BRP Renaud & Partner

(57) **Zusammenfassung**

Die Erfindung betrifft eine Anlagenkomponente einer Abgasanlage für eine Brennkraftmaschine, insbesondere eines Kraftfahrzeugs, mit zumindest einem eine geschlossene Hohlraumstruktur (2) aufweisenden Komponentenabschnitt, wobei Wände der geschlossenen Hohlraumstruktur (2) einen Reaktionsraum (5) umschließen, in dem zumindest eine stationäre Systemkomponente (6) eines reaktiven Heizsystems angeordnet ist. Durch Verwendung eines reaktiven Heizsystems ist vorteilhaft eine schnelle Aufheizung zumindest einer Anlagenkomponente der Abgasanlage möglich.

## Beschreibung

Die vorliegende Erfindung betrifft eine Anlagenkomponente einer Abgasanlage für eine Brennkraftmaschine, insbesondere eines Kraftfahrzeugs. Ein weiterer Gegenstand der Erfindung ist eine Abgasanlage mit zumindest einer Anlagenkomponente. Desweiteren betrifft die Erfindung die Verwendung eines reaktiven Heizsystems zur Beheizung zumindest einer solchen Anlagekomponente einer solchen Abgasanlage. Ebenso betrifft die Erfindung ein Verfahren zum Aufheizen zumindest einer solchen Anlagekomponente einer solchen Abgasanlage.

Im Kaltstartbetrieb weist die Abgasanlage einer Brennkraftmaschine üblicherweise die Umgebungstemperatur auf. Im Temperaturbereich der Umgebungstemperatur sind jedoch katalytische Anlagenkomponenten der Abgasanlage, wie z. Bsp. ein Oxidationskatalysator oder ein Stickoxidspeicherkatalysator, sowie ein SCR(Selektive Katalytische Reduktion)-Katalysator auf einem Temperaturniveau, auf dem die jeweilige katalytische Anlagenkomponente ihre katalytische Funktion nicht oder zumindest nur in sehr eingeschränktem Umfang entfalten kann. Damit die katalytischen Anlagenkomponenten katalytisch aktiv werden, müssen dieselben durch den heißen Abgasstrom aufgeheizt werden. Die Abgasanlage selbst stellt jedoch mit ihren Anlagenkomponenten gewissermaßen einen thermischen Ballast dar, da die kalte Abgasanlage den Abgasstrom auch bei optimaler Isolierung abkühlt. Demzufolge wird die Temperatur der jeweiligen katalytischen Anlagenkomponente umso langsamer zunehmen, je weiter sie in Richtung des Endes der Abgasanlage positioniert ist.

Zudem kann auch in niedrigen Lastbereichen der Brennkraftmaschine die Abgastemperatur zumindest zeitweise unterhalb des Arbeitstemperaturbereichs der jeweiligen katalytischen Anlagenkomponente liegen, so dass in diesem Fall eine Abkühlung der katalytischen Anlagenkomponente unterhalb ihres Arbeitstemperaturbereichs durch das Abgas möglich ist.

Diese zuvor beispielhaft beschriebenen Problemstellungen hinsichtlich des gewünschten Arbeitstemperaturbereichs katalytischer Anlagenkomponenten können nur bedingt durch eine optimale Isolierung der Abgasanlage oder deren Ablagenkomponenten kompensiert werden.

Aufgrund nicht wirksamer katalytischer Anlagenkomponenten sind die dabei auftretenden Abgasemissionswerte nicht tolerierbar und demzufolge ist z. Bsp. im Kaltstartbetrieb ein sofortiges Aufheizen wünschenswert und bspw. in einem niederen Lastbereich eine zusätzliche Aufheizung zumindest der katalytischen Anlagenkomponenten vorteilhaft.

Es besteht daher ein zunehmender Bedarf an Möglichkeiten, zumindest die katalytischen Anlagenkomponenten einer Abgasanlage möglichst schnell auf Arbeitstemperatur zu bringen und/oder einen Arbeitstemperaturbereich einer katalytischen Anlagenkomponente exakt und konstant zu halten.

Die vorliegende Erfindung beschäftigt sich dementsprechend mit dem Problem, für eine Abgasanlage deren Anlagenkomponenten, sowie für ein zugehöriges Betriebsverfahren und für die Verwendung eines reaktiven Heizsystems eine verbesserte oder zumindest eine alternative Ausführungsform anzugeben, die sich insbesondere durch ein schnelles Aufheizverhalten der Abgasanlage und/oder deren, insbesondere katalytischen, Anlagenkomponenten auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht somit auf dem allgemeinen Gedanken, eine Abgasanlage bzw. eine Anlagenkomponente einer Abgasanlage für eine Brennkraftmaschine, insbesondere eines Kraftfahrzeugs, mit zumindest einem eine geschlossene Hohlraumstruktur aufweisenden Anlagenabschnitt bzw. Komponentenabschnitt auszustatten, wobei Wände der geschlossenen Hohlraumstruktur einen Reaktionsraum umschließen, und in der geschlossenen Hohlraumstruktur zumindest eine stationäre Systemkomponente eines reaktiven Heizsystems anzuordnen.

Dabei umfasst ein reaktives Heizsystem eine stationäre und eine mobile Systemkomponente, die in dem Reaktionsraum miteinander in einer exothermen Reaktion unter Freisetzung von Reaktionswärme reagieren.

Aufgrund der Ausstattung der Abgasanlage bzw. zumindest einer ihrer Anlagenkomponenten mit einem reaktiven Heizsystem gelingt eine schnelle Aufheizung zumindest einer solchen, insbesondere katalytischen, Anlagenkomponente. Dadurch wird die Arbeitstemperatur bzw. der Arbeitstemperaturbereich der jeweiligen katalytischen Anlagenkomponente schnell erreicht und die Abgasemissionswerte können damit signifikant gesenkt werden.

Dabei kann die gesamte Abgasanlage, ein Anlagenabschnitt der Abgasanlage, eine Anlagenkomponente der Abgasanlage und/oder einen Komponentenabschnitt der Anlagenkomponente mit einer derartigen zumindest eine stationäre Systemkomponente eines reaktiven Heizsystems ausgestatteten Hohlraumstruktur ausgestattet werden. Die Positionierung einer derartigen Hohlraumstruktur kann demzufolge in bzw. an einem Krümmer, einer Ladeeinrichtung, einem Vorrohr, einem Oxidations-Katalysator, einem Diesel-Partikelfilter, einem Abgasrohr, einer HWL(Harnstoff-Wasser-Lösung)-Dosiereinrichtung, einem SCR(Selektive Katalytische Reduktion)-Katalysator, einem NSK (NOX-Speicher-Katalysator), einem hinteren Abgasrohr, Verbindungsleitungen, Rückschlagventilen oder dergleichen vorgenommen werden.

Die Hohlraumstruktur ist geschlossen ausgebildet und demzufolge ist durch die Wände der Hohlraumstruktur ein Stoffaustausch mit der Umgebung verhindert bzw. bis auf ein zu vernachlässigendes Maß unterbunden. Die Wände der Hohlraumstruktur umschließen einen Reaktionsraum, in dem die Systemkomponenten eines reaktiven Heizsystems miteinander in einer exothermen Reaktion reagieren können. Die Hohlraumstruktur kann als doppelwandige Ummantelung ausgebildet sein, wobei eine derartige doppelwandige Ummantelung nur in Teilbereichen der jeweiligen Anlagenkomponente angeordnet sein kann. Die doppelwandige Ummantelung muss dabei die jeweilige Anlagenkomponente nicht zwingend, auch nicht teilweise in Umfangsrichtung geschlossen umgeben. Somit ist auch in Umfangsrichtung eine nur teilweise Anordnung einer derartigen doppelwandigen Ummantelung möglich.

Bevorzugt wird eine derartige doppelwandige Ummantelung bei Abgasrohrabschnitten und/oder bei einer katalytischen Anlagenkomponente, sowie bei im Wesentlichen zylindrischen Abgasanlagenkomponenten eingesetzt. Besonders bevorzugt werden doppelwandige Ummantelungen bei Wandungen katalytischer Anlagenkomponenten, wie z. Bsp. einem Katalysator, z.B. NSK oder SCR, einem Dieselpartikelfilter, einer HWL-Dosiereinrichtung und/oder einer FP-Anlagenkomponente sowie bei Rohren und Rohrabschnitten eingesetzt.

Die doppelwandige Ummantelung kann in unterschiedlicher Art und Weise ausgebildet sein. Bevorzugt ist dabei ein tragendes Rohr oder tragendes Gehäuse außenseitig und/oder innenseitig von einer, insbesondere aus Blech ausgeformten, Wandung zumindest teilweise umgeben. Zwischen dem Gehäuse bzw. Rohr und der Wandung wird dann der evakuierbare Zwischenraum ausgebildet. Die innenseitig und/oder außenseitig positionierte Wandung ist mit dem Rohr bzw. Gehäuse durch Schweißen, Bördeln, Falzen oder dergleichen so verbunden, dass der Zwischenraum druckdicht ausgebildet ist. Die doppelwandige Ummantelung wird somit durch das Gehäuse oder das Rohr zusammen mit der Wandung ausgebildet.

Ebenfalls bevorzugt kann das Rohr bzw. Gehäuse innen- und/oder außenseitig von einem, insbesondere nicht tragenden, doppelwandigen Mantel zumindest teilweise umgeben sein. Dieser doppelwandige Mantel kann ebenfalls mit dem Rohr bzw. Gehäuse durch Schweißen, Bördeln, Falzen oder dergleichen verbunden sein. Dabei ist der Zwischenraum zwischen den Wänden des doppelwandigen Mantels angeordnet und druckdicht ausgebildet. Die doppelwandige Ummantelung wird in diesem Fall durch den doppelwandigen Mantel ausgebildet.

Des Weiteren ist auch die Ausbildung des Zwischenraums zwischen zwei tragenden Gehäusewandungen und/oder Rohren denkbar, wobei die Gehäusewandungen bzw. Rohre druckdicht miteinander durch Schweißen, Bördeln, Flanschen oder dergleichen verschlossen sind. In diesem Fall wird die doppelwandige Ummantelung durch die Gehäusewandungen und/oder Rohre ausgebildet.

Ebenso bevorzugt ist die Hohlraumstruktur als ein Behälter ausgebildet, der in und/oder an der jeweiligen Anlagenkomponente angeordnet ist.

Desweiteren kann die Hohlraumstruktur bevorzugt als ein geschlossenes Kanalsystem ausgebildet sein. Ein derartiges Kanalsystem kann als Rohrleitungssystem ausgebildet sein oder z. Bsp. als System mehrerer geschlossener Kanäle im Inneren eines Katalysatorsubstrates.

Bevorzugt ist die Hohlraumstruktur als Spaltgehäuse ausgebildet, wobei der Reaktionsraum in diesem Fall durch den Spalt des Spaltgehäuses ausgebildet wird. Eine derartige Ausbildung der Hohlraumstruktur durch ein Spaltgehäuse entspricht im Wesentlichen einem doppelwandigen Aufbau.

Bevorzugt wird die als Spaltgehäuse ausgebildete Hohlraumstruktur bei katalytischen Anlagenkomponenten, bei einem Diesel-Partikelfilter, bei einem SCR-Katalysator, bei einer HWL-Dosiereinrichtung, bei einem Fuelprozessor und/oder bei einem Kraftstoffinjektor verwendet.

Im Falle der Ausbildung der Hohlraumstruktur in Art eines Rohrleitungssystems kann das Rohrleitungssystem zusätzlich mit einer Heizplatte versehen werden, die aufgrund des Kontakts mit dem Rohrleitungssystem durch dasselbe aufgeheizt wird und aufgrund der vergrößerten Oberfläche eine stärkere Abgabe von Wärme ermöglicht. Eine derartige Heizplatte kann in oder außen an einer Anlagenkomponente angeordnet sein. Bevorzugt wird eine derartige Heizplatte bei katalytischen Anlagenkomponenten, einem Dieselpartikelfilter, einem SCR-Katalysator innenseitig der Anlagenkomponente verwendet. Im Falle einer SCR-Mischeinrichtung ist eine solche Heizplatte bevorzugt integral mit der SCR-Mischeinrichtung ausgebildet. Ein solches Rohrleitungssystem mit Heizplatte kann als reaktives Heizelement bezeichnet werden.

Ein Rohrleitungssystem kann mehrere Windungen aufweisend zu einem Heizregister ausgebildet sein, welches bevorzugt im Ansaugtrakt der Brennkraftmaschine eingesetzt ist.

Zudem sind bevorzugt spaltförmige Hohlraumstrukturen bevorzugt im Bereich des Zylinderkopfes und/oder des Ansaugtraktes positioniert. Desweiteren ist ebenfalls bevorzugt ein Heizregister im Klimakasten des Heizungssystems angeordnet.

Die Wände der Hohlraumstruktur und/oder die Heizplatte sind bevorzugt aus Metall ausgebildet. Als metallische Materialien sind besonders bevorzugt Aluminium, Aluminiumlegierungen, Eisen, Eisenlegierungen, Stahl und Stahllegierungen.

Bevorzugt weist die Hohlraumstruktur Stabilisierungsstrukturen auf. So sind bevorzugt innerhalb der Hohlraumstruktur mechanisch stabilisierende Einlagen angeordnet, wie z. Bsp. gewellte Bleche, durchbrochene gewellte Bleche, Noppen, Stege oder anderweitige Distanzelemente. Es können auch Faserstrukturen, offen poröse oder geschlossen poröse Schäume oder dergleichen als Distanzelemente verwendet werden.

Desweiteren kann zumindest eine Wand der Hohlraumstruktur gewellt ausgebildet sein. Aufgrund der gewellten Ausbildung ist ein Ausgleich der Wärmedehnung ermöglicht. Dadurch kann zumindest die gewellt ausgebildete Wand flexibler verlegt werden und man hat mehr Freiheitsgrade in der konstruktiven Gestaltung der Abgasanlage.

Bevorzugt wird eine derartig gewellte Wand im Falle einer doppelwandigen Ummantelung verwendet.

Das reaktive Heizsystem weist zumindest eine mobile und zumindest eine stationäre Systemkomponente auf, sowie mehrere Konstruktionselemente, wie z. Bsp. den Reaktionsraum. Das reaktive Heizsystem funktioniert grundlegend aufgrund der exothermen Reaktion der zumindest einen mobilen Systemkomponente mit der zumindest einen stationären Reaktionskomponente in dem Reaktionsraum. Aufgrund der durch die exotherme Reaktion frei werdenden Reaktionswärme kann ein derartiges reaktives Heizsystem zur Aufheizung zumindest einer Anlagenkomponente herangezogen werden. Im Sinne der Erfindung ist eine derartige exotherme Reaktion zwischen den zumindest zwei Systemkomponenten weitestgehend reversibel ausgebildet.

Eine solche mobile Systemkomponente des reaktiven Heizsystems liegt im nicht gebundenen, bevorrateten Zustand flüssig und/oder gas- bzw. dampfförmig vor. Im ausgetriebenen Zustand liegt die mobile Systemkomponente gas- bzw. dampfförmig vor. Die stationäre Systemkomponente ist in dem Reaktionsraum bzw. in der Hohlraumstruktur angeordnet und liegt im gebundenen sowie im ungebundenen Zustand fest vor.

Bevorzugt ist die stationäre Systemkomponente als Schüttung und/oder strukturierter Formkörper oder als monolithischer Formkörper in dem Reaktionsraum bzw. in der Hohlraumstruktur angeordnet. Besonders bevorzugt ist zumindest eine Wand der Hohlraumstruktur mit der stationären Systemkomponente beschichtet. Bevorzugt kann zusätzlich oder alternativ zumindest ein Distanzelement der Hohlraumstruktur, wie z. Bsp. ein Fasermaterial, ein offen poröser Schaum oder dergleichen mit zumindest einer stationären Systemkomponente beschichtet sein. Ganz besonders bevorzugt ist innerhalb der Hohlraumstruktur ein offen poröser Schaum positioniert, der zumindest teilweise aus der mobilen Systemskomponente besteht.

Grundsätzlich weist das reaktive Heizsystem die Konstruktionselemente Reaktionsraum, Vorratseinrichtung und eine dem Reaktionsraum mit der Vorratseinrichtung fluidisch verbindende Verbindungsleitung auf. In dem Reaktionsraum ist zumindest eine stationäre Systemkomponente angeordnet, während die Vorratseinrichtung zur Bevorratung der zumindest einen ungebundenen mobilen Systemkomponente dient. Durch die Verbindungsleitung kann dem Reaktionsraum die zumindest eine mobile Systemkomponente aus der Vorratseinrichtung zugeführt werden. Desweiteren kann in der Verbindungsleitung eine Dosiereinrichtung angeordnet sein, mit der die Zufuhr der zumindest einen mobilen Systemkomponente zu dem Reaktionsraum dosiert bzw. gesteuert werden kann. Die Dosiereinrichtung kann als Pumpe, als Steuerventil, Injektionsvorrichtung oder dergleichen ausgebildet sein. Bevorzugt ist in der Verbindungsleitung eine Rückschlageinrichtung angeordnet. Des Weiteren ist besonders bevorzugt nach der Dosiereinrichtung und ganz besonders bevorzugt vor der Dosiereinrichtung in der Verbindungsleitung die Rückschlageinrichtung, wie z. Bsp. ein Rückschlagventil, positioniert, das einen Rücklauf der mobilen Komponente von dem Reaktionsraum in die Vorratseinrichtung zumindest während der Zugabe der mobilen Systemkomponente unterbindet.

Bevorzugt ist in der Verbindungsleitung ein Kondensationskühler angeordnet, der die gas- bzw. dampfförmige mobile Systemkomponente verflüssigt. Besonders bevorzugt ist der Kondensationskühler in einer separaten Verbindungsleitung positioniert.

Die Verbindungsleitung ist bevorzugt als Rohrleitung ausgebildet. Bevorzugt ist die Verbindungsleitung aus Kunststoff ausgebildet, besonders bevorzugt metallisch und ganz besonders bevorzugt bereichsweise metallisch.

Die Vorratseinrichtung ist bevorzugt als geschlossener Sammelbehälter ausgebildet, der bevorzugt aus Kunststoff und ganz besonders bevorzugt aus Metall hergestellt ist. Im Falle der metallischen Ausbildung ist eine Ausbildung aus Aluminium oder einer Aluminiumlegierung besonders bevorzugt.

In einem ersten Temperaturbereich kann durch Zuleitung der mobilen Systemkomponente aus der Vorratseinrichtung die exotherme Reaktionswärme abgebende Reaktion in dem Reaktionsraum gestartet werden. Dabei reagiert die zumindest eine mobile Systemkomponente mit der zumindest einen stationären Systemkomponente in einer chemischen und/oder physikalischen Reaktion zu einer physikalischen oder chemischen Verbindung. Die dabei frei werdende Reaktionswärme kann zum Aufheizen zumindest einer Anlagenkomponente der Abgasanlage herangezogen werden. Der erste Temperaturbereich ist bevorzugt unterhalb von 50°C, besonders bevorzugt unterhalb von 100°C und ganz besonders bevorzugt unterhalb des Arbeitstemperaturbereichs der jeweiligen, insbesondere katalytischen, Anlagenkomponente angeordnet. Dabei bezieht sich der erste Temperaturbereich auf die Temperatur des Abgases und/oder auf die Temperatur der jeweiligen Anlagenkomponente.

Die aufgrund der exothermen Reaktion gebildete physikalische oder chemische Verbindung ist in einer reversiblen exothermen Reaktion gebildet, so dass innerhalb eines zweiten Temperaturbereiches infolge einer Zersetzungsreaktion die Spaltung der physikalischen bzw. chemischen Verbindung zu der zumindest einen mobilen und zumindest eine stationäre Systemkomponete gelingt. Diese Zersetzungsreaktion findet ebenfalls im Reaktionsraum statt, sie ist endotherm und bezieht die benötigte Reaktionsenergie aus der Abwärme des Abgasstroms.

Die Funktionsweise des reaktiven Heizsystems kann rudimentär in zwei Phasen unterteilt werden. In einer Aufheizphase innerhalb eines vorbestimmten ersten Temperaturbereichs wird dem Reaktionsraum über die Verbindungsleitung und ggf. durch die Dosiereinrichtung gesteuert, die zumindest eine mobile Systemkomponente zugeführt. Dadurch kann die mobile Systemkomponente mit der stationären Systemkomponente reagieren und die dabei frei werdende Reaktionswärme dieser exothermen Reaktion zur Aufheizung zumindest einer Anlagenkomponente der Abgasanlage herangezogen werden. Dabei reagiert die zumindest eine mobile Systemkomponente mit zumindest einer stationären Systemkomponente zu einer chemischen oder physikalischen Verbindung.

In einer Regenerierphase innerhalb eines vorbestimmten zweiten Temperaturbereichs, der üblicher Weise höher liegt als der erste Temperaturbereich kann die exotherme Reaktion zu der chemischen bzw. physikalischen Verbindung mittels einer Zersetzungsreaktion umgekehrt werden. In diesem zweiten Temperaturbereich erfährt die chemische bzw. physikalische Verbindung eine Spaltung in einer endothermen Reaktion zu der zumindest einen mobilen und zumindest einen stationären Systemkomponente. Dabei fällt in diesem vorbestimmten zweiten Temperaturbereich die zumindest eine mobile Systemkomponente dampf― und/oder gasförmig an und kann über die Verbindungsleitung und/oder über eine separate Verbindungsleitung zu der Vorratseinrichtung geleitet werden.

Bevorzugt ist in zumindest einer der Verbindungsleitungen ein Kondensationskühler angeordnet, mit dem die gas- bzw. dampfförmige mobile Systemkomponente verflüssigt werden kann und in verflüssigtem Zustand in der Vorratseinrichtung bevorratet werden kann.

Ohne Kondensationskühler ist es denkbar, dass die Verflüssigung der mobilen Systemskomponente in der Vorratseinrichtung selbst stattfindet, die bevorzugt gekühlt werden kann.

Ist die mobile Systemkomponente rein gasförmig ausgebildet, so kann ebenfalls auf den Kondensationskühler verzichtet werden und die gasförmige Mobilsystemkomponente mittels eines Kompressors unter Druck in der Vorratseinrichtung bevorratet gelagert werden.

Besonders bevorzugt ist die Menge an mobiler Systemkomponente überdimensioniert, so dass mit der einmal bevorrateten Menge an mobiler Systemkomponente eine mehrmalige Aufheizung zumindest einer Anlagenkomponente durchgeführt werden kann, ohne das zwischen den Aufheizphasen notwendigerweise eine Regenerierphase stattfinden muss.

Vorteilhaft ist ein derartiges reaktives Heizsystem regenerativ ausgebildet, das zudem einen Teil der Abwärme des Abgasstroms in Form von chemischer und/oder physikalischer Reaktionswärme speichert. Demzufolge tritt bei einem derartigen reaktiven Heizsystem im Stillstand der Brennkraftmaschine hinsichtlich des reaktiven Heizsystems kein Wärmeverlust auf.

Zudem kann vorteilhaft durch Verwendung einer Dosiereinrichtung die Menge an erzeugter Reaktionswärme zum Aufheizen zumindest einer Anlagenkomponente gesteuert werden, so dass im Falle einer überdimensionierten Bevorratung der mobilen Systemkomponente mehrere Aufheizphasen durchgeführt werden, ohne zwischen den Aufheizphasen eine Regenerierphase durchführen zu müssen.

Ein derartiges reaktives Heizsystem kann chemisch und/oder physikalisch ausgebildet sein. Ein Beispiel für eine physikalische Ausbildung eines derartigen reaktiven Heizsystems ist ein adsorptiv-reaktives Heizsystem. Bei einem adsorptiv-reaktiven Heizsystem wird als stationäre Systemkomponente zumindest ein Adsorbens verwendet und als mobile Systemkomponente eine Flüssigkeit oder ein Gas. Die bei Kontakt der mobilen Systemkomponente mit der stationären Systemkomponente stattfindende Reaktion ist die Adsorption.

Unter einer Adsorption versteht man eine oberflächliche Anreicherung von Gasen oder Flüssigkeiten an der Oberfläche eines Festkörpers. Dabei kann die Adsorption rein physikalisch als auch teilweise chemisch in Art einer Chemiesorption stattfinden. Ein Beispiel für die Chemiesorption ist z. Bsp. die Anlagerung von Doppelbindungen an nickelhaltige Katalysatoren. Somit muss die Adsorption nicht zwingend rein physikalisch verlaufen, sondern sie kann anteilig oder vollständig auf chemischen Gesetzmäßigkeiten beruhen.

Bevorzugt wird als Adsorbens Zeolith, Silikagel, Aktivkohle oder als ein Molekularsieb ausgebildete Aktivkohle, sowie Bentonit verwendet. Als mobile Systemkomponente werden bevorzugt Wasser, Alkohole, Kohlenwasserstoffe oder ein Gemisch aus diesen Stoffen verwendet.

Desweiteren kann das adsorptiv-reaktive System hydrophil oder hydrophob ausgebildet sein. Im Falle eines hydrophilen adsorptiv-reaktiven Heizsystems wird als hydrophiles Adsorbens bevorzugt Zeolith, insbesondere hydrophil, und/oder Silikagel verwendet. Als polare mobile Systemkomponente wird bevorzugt Wasser, Alkohol sowie ein Gemisch aus polaren Verbindungen, wie z. Bsp. Wasser, Alkoholen, Carbonsäuren, saure wässrige Lösungen, alkalisch wässrige Lösungen, ammoniakalische wässrige Lösungen oder dergleichen verwendet.

Im Falle eines hydrophoben adsorptiv-reaktiven Systems wird bevorzugt als hydrophobes Adsorbens hydrophobe Zeolithe, wie bspw. dealluminierte Zeolithe und/oder Aktivkohle verwendet. Bevorzugt finden als unpolare mobile Systemkomponenten Kohlenwasserstoffe und Gemische aus unpolaren Verbindungen Verwendung.

Bevorzugt werden folgende adsorptiv-reaktive Heizsysteme eingesetzt: hydrophile Zeolithe mit Wasser, Zeolithe mit Alkohol und Zeolithe mit einem Wasser-Frostschutz-Gemisch, z.B. Wasser-Alkohol-Gemisch.

Besonders bevorzugt werden nicht brennbare Adsorbentien und/oder nicht brennbare mobile Systemkomponenten eingesetzt.

Besonders bevorzugt ist das adsorptiv-reaktive Heizsystem geschlossen ausgebildet, so dass ein Stoffaustausch mit der Umgebung unterbunden ist. In diesem Fall ist bevorzugt der Systemdruck im kalten Zustand bei einer vorbestimmten Temperatur des kalten Zustands gleich dem Umgebungsdruck. Besonders bevorzugt ist der Systemdruck im kalten Zustand bei einer vorbestimmten Temperatur des kalten Zustands kleiner als der Umgebungsdruck. Bevorzugt ist die vorbestimmte Temperatur des kalten Zustands zwischen -20°C und 50°C, besonders bevorzugt zwischen -10°C und 40°C und ganz besonders bevorzugt zwischen 0°C und 25°C angeordnet.

Obwohl die vorbeschriebenen Ausführungsformen eines physikalisch reaktiven Heizsystems auf der Basis von Adsorptionsvorgängen arbeiten, sind grundsätzlich auch Ausführungsformen möglich, die auf Absorptionsvorgängen beruhen oder mit einer Kombination aus Adsorption und Absorption arbeiten.

Desweiteren kann ein derartiges reaktives Heizsystem als chemisch reaktives Heizsystem ausgebildet sein. In diesem Fall reagieren die Systemkomponenten chemisch miteinander, wobei aufgrund der chemischen Reaktion eine chemische Verbindung gebildet wird. Bevorzugt findet dabei die endotherme Zersetzungsreaktion der chemischen Verbindung zu den einzelnen Systemkomponenten bei einer Abgastemperatur und/oder Anlagenkomponententemperatur von 200°C bis 600°C statt, besonders bevorzugt bei 300°C bis 500°C und ganz besonders bevorzugt bei 400°C bis 500°C.

Bevorzugt wird als ein derartiges chemisch reaktives Heizsystem als stationäre Systemkomponente ein Erdalkalioxid, wie z. Bsp. Kalziumoxid, Bariumoxid oder Strontiumoxid, besonders bevorzugt Kalziumoxid, verwendet und als mobile Systemkomponente Wasser.

Als weitere chemisch reaktive Heizsysteme können Systeme basierend auf einer Kristallwasseranlagerung bzw. Kristallwassereinlagerung oder basierend auf die, insbesondere komplexe, Bindung von Kohlenmonoxid bevorzugt verwendet werden.

Bevorzugt wird ein reaktives Heizsystem verwendet, das eine stationäre Systemkomponente und eine mobile Systemkomponente aufweist. Besonders bevorzugt wird ein reaktives Heizsystem verwendet, das zumindest zwei stationäre Systemkomponenten und eine mobile Systemkomponente aufweist. In diesem Fall ist vorteilhaft aufgrund der unterschiedlichen Reaktion der jeweiligen stationären Systemkomponente mit der mobilen Systemkomponente ein unterschiedliches Temperaturgefüge in dem jeweiligen Reaktionsraum möglich. Dadurch kann mit ein und derselben mobilen Systemkomponente ein unterschiedliches Aufheizverhalten in den jeweiligen Anlagenkomponenten bzw. Komponentenabschnitten erzeugt werden.

Ganz besonders bevorzugt wird ein reaktives Heizsystem mit zumindest zwei aus unterschiedlichen Materialien bestehenden, stationären Systemkomponenten und mit einer mobilen Systemkomponente, die ein Gemisch aus mehreren Verbindungen darstellt, verwendet. In diesem Fall ist es denkbar, dass aufgrund der Reaktion der jeweiligen stationären Systemkomponente mit der jeweiligen Verbindung der mobilen Systemkomponenten ebenfalls ein differenziertes Temperaturgefüge in den jeweiligen Anlagenkomponenten bzw. Komponentenabschnitten erzeugt werden kann. Diese Ausbildung des reaktiven Heizsystems mit unterschiedlichen stationären wie mobilen Systemkomponenten ermöglicht eine räumlich flexible Aufheizung der Anlagenkomponenten bzw. der Abgasanlage.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Anlagenkomponente einer Abgasanlage mit einer durch eine stationäre Systemkomponente verfüllte Hohlraumstruktur,
- Fig. 2: eine Anlagenkomponente mit einer Hohlraumstruktur, bei der auf der innenseitigen Wand der Hohlraumstruktur eine stationäre Systemkomponente aufgebracht ist,
- Fig. 3: eine Anlagenkomponente mit einer gewellten Wand der Hohlraumstruktur,
- Fig. 4: eine Anlagenkomponente mit einer Hohlraumstruktur, bei der auf der außenseitigen Wand der Hohlraumstruktur eine stationäre Systemkomponente aufgebracht ist,
- Fig. 5: eine Anlagenkomponente mit einem stromab vor der Anlagenkomponente positionierten reaktiven Heizelement,
- Fig. 6: ein reaktives Heizelement.

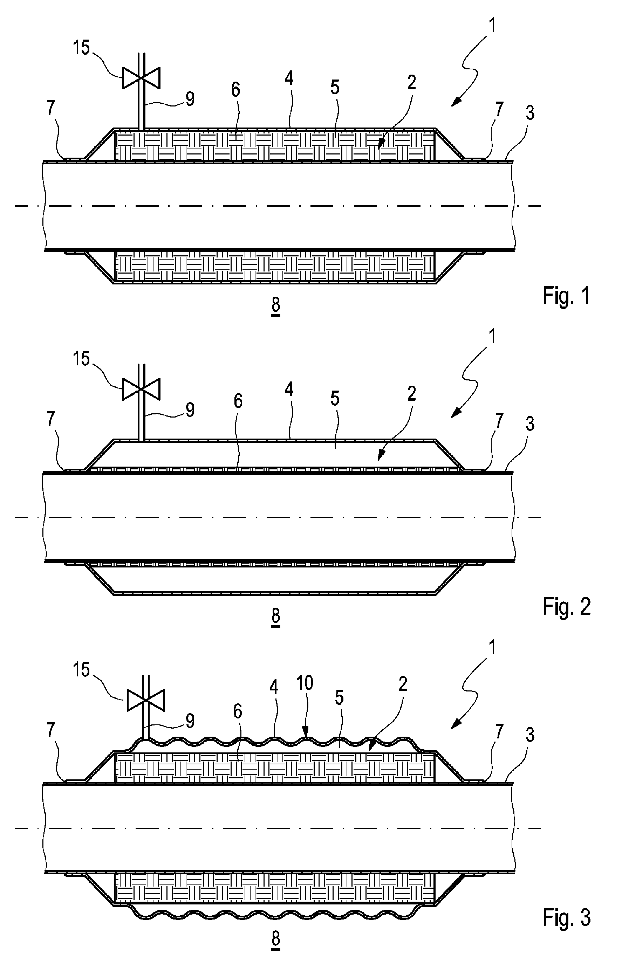

In der Fig. 1 ist eine Anlagenkomponente 1 dargestellt, die eine Hohlraumstruktur 2 aufweist. Dabei ist die Hohlraumstruktur 2 als eine doppelwandige Ummantelung ausgebildet, wobei ein rohrartiges Bauteil 3 von einem Mantel 4 umgeben ist, so dass die Hohlraumstruktur 2 durch das rohrartige Bauteil 3 und den das rohrartige Bauteil 3 umgebenen Mantel 4 ausgebildet wird. Von dem Mantel 4 und dem rohrartigen Bauteil 3 wird ein Reaktionsraum 5 umschlossen, in dem eine stationäre Systemkomponente 6 angeordnet ist.

Die stationäre Systemkomponente 6 kann monolithisch ausgebildet sein, als Schippung oder als ein Formkörper, wie z. Bsp. eine Fasermatte. Eine monolithische Ausbildung der stationären Systemkomponente 6 ist durch z. Bsp. einen offen porösen Schaum möglich. Dabei kann die in dem Reaktionsraum 5 angeordnete stationäre Systemkomponente 6 vollständig aus einem Material bestehen oder aber die stationäre Systemkomponente 6 ist auf eine Trägerstruktur aus einem anderen Material aufgetragen.

Der Mantel 4 ist über Schweißstellen 7 mit dem rohrartigen Bauteil 3 druckdicht verbunden und somit der Reaktionsraum 5 geschlossen ausgebildet, so dass zwischen dem Reaktionsraum 5 und der Umgebung 8 kein oder nur ein zu vernachlässigender Stoffaustausch möglich ist.

An den Mantel 4 ist eine Verbindungsleitung 9 druckdicht angebunden, die ihrerseits wiederum mit einer in der Fig. 1 nicht gezeigten Vorratseinrichtung fluidisch verbunden ist, in der die mobile Systemkomponente eines reaktiven Heizsystems bevorratet ist. Die Verbindungsleitung 9 dient der Zufuhr der mobilen Systemkomponente in den Reaktionsraum 5, so dass bei Zufuhr der mobilen Systemkomponente diese mit der stationäre Systemkomponente 6 reagieren kann und aufgrund der exothermen Reaktion die Reaktionswärme zum Aufheizen der Anlagenkomponente 1 freigesetzt wird. Die Verbindungsleitung 9 kann mit einer Dosiereinrichtung 15 oder mit einer steuerbaren Ventileinrichtung 15 gesteuert werden.

Die Anlagenkomponente 1, gemäß Fig. 2 weist eine stationäre Systemkomponente 6 als Beschichtung auf dem rohrartigen Bauteil 3 auf. Dadurch wird vorteilhaft die frei werdende Reaktionswärme direkt an dem rohrartigen Bauteil der Anlagenkomponente 1 erzeugt.

Die in Fig. 3 gezeigte Anlagenkomponente 1 weist einen Mantel 4 auf, der mit einer Stabilisierungsstruktur 10 ausgestattet ist. Diese Stabilisierungsstruktur 10 ist als wellenförmige Strukturierung des Mantels 4 ausgebildet. Aufgrund dieser elastischen Formgebung des Mantels 4 sind die Schweißstellen 7 durch eine Wärmeausdehnung weniger stark belastet, da die wellenförmige Strukturierung sich gegenüber der Wärmeausdehnung flexibler anpassen kann als ein glatter Mantel, wie z. Bsp. in Fig. 1 oder Fig. 2 dargestellt.

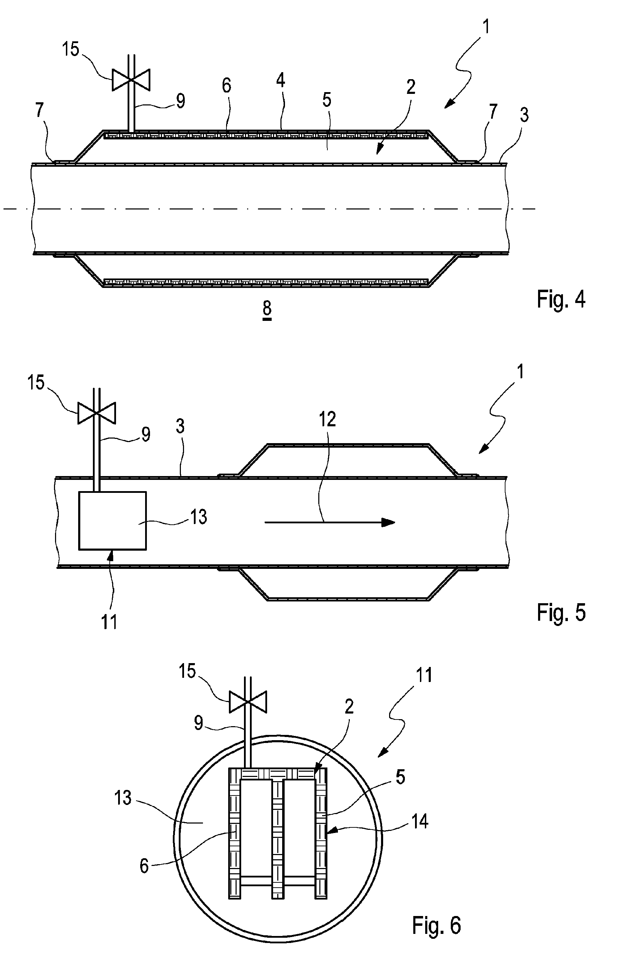

In Fig. 4 ist eine Anlagenkomponente 1 dargestellt, die die stationäre Systemkomponente 6 als Beschichtung innenseitig auf den Mantel 4 aufweist. Es ist auch denkbar, dass zusätzlich zu der in Fig. 4 gezeigten Beschichtung der stationären Systemkomponente 6 innenseitig auf den Mantel 4 eine Beschichtung der stationären Systemkomponente 6 auf dem rohrartigen Bauteil 3 angeordnet ist. Zusätzlich dazu wäre auch eine Verfüllung des Reaktionsraums 5 mit einer stationären Systemkomponente 6 denkbar.

Die Anlagenkomponente 1 weist gemäß Fig. 5 ein reaktives Heizelement 11 auf, das in Abgasströmungsrichtung 12 vor der Anlagenkomponente 1 in einem rohrartigen Bauteil 3 angeordnet ist. Das reaktive Heizelement 11 weist eine Heizplatte 13 auf, mit der die wärmeabgebende Oberfläche vergrößert werden kann, so dass eine Aufheizung der Anlagenkomponente 1 schneller vor sich geht.

Das reaktive Heizelement 11 wie in Fig. 6 dargestellt, weist eine Heizplatte 13 auf, die mit einem Rohrleitungssystem 14 verbunden ist, wobei die Heizplatte 13 und das Rohrleitungssystem 14 hinsichtlich einer guten Wärmeleitung ebenfalls miteinander verbunden sind. Das Rohrleitungssystem 14 ist mit der Verbindungsleitung 9 verbunden und weist im Inneren die stationäre Systemkomponente 6 auf. Insofern bildet das Rohrleitungssystem 14 die Hohlraumstruktur 2 aus, deren Wände wiederum den Reaktionsraum 5 umschließen. Ein solches reaktives Heizelement 11 kann alternativ oder zusätzlich zu einer stationären Systemkomponente 6 als Beschichtung in einer doppelwandigen Ummantelung eingesetzt werden.

## Patentansprüche

1. Anlagenkomponente einer Abgasanlage für eine Brennkraftmaschine, insbesondere eines Kraftfahrzeugs, mit zumindest einem eine geschlossene Hohlraumstruktur (2) aufweisenden Komponentenabschnitt, wobei Wände der geschlossenen Hohlraumstruktur (2) einen Reaktionsraum (5) umschließen, in dem zumindest eine stationäre Systemkomponente (6) eines reaktiven Heizsystems angeordnet ist.

2. Anlagenkomponente nach Anspruch 1,
**dadurch gekennzeichnet, dass**
zumindest eine solche stationäre Systemkomponente (6) als, insbesondere beschichteter, Festkörper im Reaktionsraum (5) und/oder als Beschichtung, insbesondere auf den Wänden, angeordnet ist.

3. Anlagenkomponente nach einem oder mehreren der Ansprüche 1 oder 2,
**dadurch gekennzeichnet, dass**
die geschlossene Hohlraumstruktur (2) im Reaktionsraum (5) zumindest eine Stabilisierungsstruktur (10) aufweist.

4. Abgasanlage nach Anspruch 3,
**dadurch gekennzeichnet,**
- **dass** die Stabilisierungsstruktur durch zumindest eine dehnungskompensierende Wandverformung (10) gebildet ist, und/oder
- **dass** die Stabilisierungsstruktur durch stabilisierende Einlagen gebildet ist.

5. Abgasanlage mit zumindest einer Anlagenkomponente (1), insbesondere nach einem der vorhergehenden Ansprüche, wobei die Abgasanlage zumindest in einem Anlagenabschnitt eine geschlossene Hohlraumstruktur (2) aufweist, dessen Wände einen Reaktionsraum (5) umschließen, in dem zumindest eine stationäre Systemkomponente (6) eines reaktiven Heizsystems angeordnet ist.

6. Abgasanlage nach Anspruch 5,
**dadurch gekennzeichnet, dass**
der Reaktionsraum (5) über eine Verbindungsleitung (9) mit einer Vorratseinrichtung für eine mobile Systemkomponente des reaktiven Heizsystems fluidisch leitend verbunden ist.

7. Abgasanlage nach einem oder mehreren der Ansprüche 5 oder 6,
**dadurch gekennzeichnet, dass**
in der Verbindungsleitung (9) eine Dosiereinrichtung (15) oder eine steuerbare Ventileinrichtung (15) angeordnet ist.

8. Verwendung eines reaktiven Heizsystems zur Beheizung zumindest einer Anlagenkomponente (1), insbesondere nach einem oder mehreren der Ansprüche 1 bis 4, einer Abgasanlage, insbesondere nach einem oder mehreren der Ansprüche 5 bis 7, wobei das reaktive Heizsystem zumindest eine stationäre Systemkomponente (6) und zumindest eine mobile Systemkomponente aufweist.

9. Verwendung nach Anspruch 8,
**dadurch gekennzeichnet, dass**
das reaktive Heizsystem zumindest zwei stationäre Systemkomponenten (6) aus unterschiedlichen Materialien aufweist.

10. Verwendung nach Anspruch 8 oder 9,
**dadurch gekennzeichnet,**
**dass** das reaktive Heizsystem zumindest zwei mobile Systemkomponenten aus unterschiedlichen Materialien aufweist.

11. Verfahren zum Aufheizen zumindest einer Anlagenkomponente (1), insbesondere nach einem oder mehreren der Ansprüche 1 bis 4, einer Abgasanlage, insbesondere nach einem oder mehreren der Ansprüche 5 bis 7, mit einem zumindest eine stationäre Systemkomponente (6) und zumindest eine mobile Systemkomponente aufweisenden reaktiven Heizsystem, bei dem die freiwerdende Reaktionswärme einer exothermen, physikalischen und/oder chemischen, in einem Reaktionsraum (5) der Abgasanlage und/oder Anlagenkomponente (1) ablaufenden Reaktion der Systemkomponenten zu einer physikalischen und/oder chemischen Verbindung zum Aufheizen verwendet wird.

12. Verfahren nach Anspruch 11,
**dadurch gekennzeichnet, dass**
innerhalb eines vorbestimmten ersten Temperaturbereiches die exotherme, physikalische und/oder chemische Reaktion zu der physikalischen und/oder chemischen Verbindung abläuft.

13. Verfahren nach Anspruch 11 oder 12,
**dadurch gekennzeichnet,**
**dass** innerhalb eines vorbestimmten zweiten Temperaturbereiches eine endotherme Zersetzungsreaktion der physikalischen und/oder chemischen Verbindung zu den ursprünglichen Systemkomponenten abläuft.

14. Verfahren nach einem der Ansprüche 11 bis 13,
**dadurch gekennzeichnet,**
**dass** eine physikalische Reaktion mit einer stationären Systemkomponente aus Zeolith und einer mobilen Systemkomponente aus Wasser oder aus Alkohol oder aus einem Gemisch aus Wasser und einem Frostschutzmittel, wie z.B. Alkohol, durchgeführt wird.

15. Verfahren nach einem der Ansprüche 11 bis 14,
**dadurch gekennzeichnet,**
**dass** eine chemische Reaktion mit einer stationären Systemkomponente aus einem Erdalkalioxid, bevorzugt Kaliumoxid, und einer mobilen Systemkomponente aus Wasser oder aus Alkohol oder aus einem Gemisch aus Wasser und einem Frostschutzmittel, wie z.B. Alkohol, durchgeführt wird.
